# EUROPEAN PATENT SPECIFICATION

(11) **EP 4 245 110 B1**
(45) Date of publication and mention of the grant of the patent: **03.06.2026**
(21) Application number: 22161992.7
(22) Date of filing: 14.03.2022
(51) Int. Cl.: A01B 79/00, A01D 43/08, A01D 41/127, G06Q 50/02

(54) **HARVESTING INFORMATION DISPLAY METHOD**
ERNTEINFORMATIONSANZEIGEVERFAHREN
PROCÉDÉ D'AFFICHAGE D'INFORMATIONS DE RÉCOLTE

(43) Date of publication of application: 20.09.2023
(73) Proprietor: CNH Industrial Belgium N.V., 8210 Zedelgem (BE)
(72) Inventor: DELIE, Dries, 8920 Poelkapelle (BE); WENGER, Bradley J., Leola, 17540 (US)
(74) Representative: CNH Industrial IP Department

(56) References cited:
- US-A1- 2017 115 862
- US-A1- 2021 243 950

## Description

### TECHNICAL FIELD

The present invention relates to a method of displaying harvesting information during harvesting by an agricultural harvester. The present invention further relates to a computer program product, a system, and an agricultural harvester configured to perform this method.

### BACKGROUND

Modern agricultural harvesters have a lot of operational parameters that can be set while harvesting. In a forage harvester, for example, the user may change a forward drive speed, header height, feed roll speed, or kernel processor configuration while continuing to harvest crop. By adjusting the harvester configuration, the user may increase the crop volume that is taken from the land, adjust a length of cut of the chopped crop that is thrown into the trailer following the harvester, or control the crushing of grain kernels and other plant material by the kernel processor.

With these adjustments, the user tries to achieve various goals such as increasing the amount of crop that is harvested, ensuring that the quality of the harvested crop is optimal, and limiting the use of fuel for driving and operating the harvester. In modern forage harvesters, sensors may be available to inform the user about fuel consumption, harvested volumes, and length of cut, moisture content, ash content, fibre content, protein content, and sugar content of the harvested crop. Based on this information, the user makes his decisions about how to adapt the operational parameters of the harvester to optimise his harvesting results. Often, the various harvesting goals the user may have cannot be achieved simultaneously. Taking in more crop and cutting it into smaller pieces requires more fuel. Raising the header to improve the nutritional value of the harvested crop leads to a lower total volume of harvester material. A lot of experience and guess work is therefore needed to optimally control a forage harvester.

To complicate things even further, the user may often not really be interested in the amount or quality of the harvested crop as such. When the harvested crop is to be used for feeding cattle or generating biogas, the main interest for the user will be to maximise an amount of milk, meat, biogas, or other end product that can be produced with the harvested crop.

Adjusting operational parameters of the harvester in order to harvest more crops does not always lead to more end product. This further complicates the decision process for the user operating the forage harvester. US 2017/115862 discloses a device and a method for displaying harvesting information.

It is an aim of the present invention to address one or more disadvantages associated with the prior art.

### SUMMARY OF THE INVENTION

According to an aspect of the invention there is provided a method of displaying harvesting information during harvesting by an agricultural harvester. The method comprises the steps of repeatedly receiving harvesting data, calculating a current yield parameter and a current quality parameter, and generating instructions for displaying a datapoint in a dynamic harvest chart. The harvesting data indicates at least an amount of harvested crop and a nutritional attribute of the harvested crop. The current yield and quality parameter are calculated based on the received harvesting data. The datapoint is positioned in the dynamic harvest chart at a datapoint location along a yield axis and a quality axis, the datapoint location being determined by the current yield parameter and the current quality parameter.

By displaying a series of datapoints in the dynamic harvest chart, the user is not just presented with relevant information for deciding on how to appropriately control the harvester, but this information is made available in such a way that it is immediately apparent how the yield and quality parameter develop over time during the harvesting session. The effect of any adjustments made while harvesting will be directly visible by observing the position of the most recent datapoint relative to the previous datapoints. This allows the user to quickly assess whether a particular adjustment of the harvester configuration leads to an improved yield, an improved crop quality, or both. Depending on the user's priorities, he may aim to move new datapoints to the right if he goes for more yield, upwards if he wants more quality, or towards the top right if he wants a mixture of both. It is an important advantage of the current invention that the dynamic harvest chart is built up while harvesting. This enables the user to find the optimal harvester configuration for the particular field and crop that is being harvested, without being distracted or discouraged by less relevant standard values based on historic averages.

According to the invention, the step of calculating the current yield parameter and/or the current quality parameter comprises using a model for predicting an amount of end product that can be produced with the harvested crop. For example, the current yield parameter represents an amount of end product per unit of harvested area and/or the current quality parameter represents an amount of end product per amount of harvested crop, wherein the end product is milk, meat or biogas.

When the harvested crop is, e.g., to be used for feeding cattle or generating biogas, the user will mainly be interested to maximise an amount of milk, meat, biogas, or other end product that can be produced with the harvested crop. If the yield parameter is based on the amount of end product instead of on the amount of harvested crop, this will provide for a more intuitive representation of the harvesting results and any datapoint movement in the forward direction of the yield axis can be considered as an improvement. Similarly, the user may have a greater interest in the amount of milk, meat, or biogas per kg of harvested crop than in a sugar content, moisture level or unclear normalised quality value.

In preferred embodiments, an appearance of the datapoint is time dependent. For example, a shape, size, or colour of the datapoints may vary depending on how long ago it was generated. Typically, the most recent datapoint is visualised in such a way that it clearly stands out from the other datapoints, for example by being bigger, in a different colour, or flashing. Past datapoints may shrink stepwise or gradually or may slowly transition between full colour and transparent. A selected portion of the past datapoints may remain visible, such as to keep the datapoint history visible without showing too much data in one view.

Optionally, the controller is further arranged to generate instructions for displaying a datapoint space in the dynamic harvest chart, the datapoint space forming a bound area comprising all datapoints displayed in the dynamic harvest chart. The datapoint space may gradually grow while new datapoints are added to the dynamic harvest chart. When clearly indicating the datapoint space, there may be less need to continue showing all of the past datapoints. Parts of the datapoint space may be colour coded, for example to indicate regions with favourable, acceptable, and unfavourable harvester settings.

In some embodiments, averaged datapoints may be shown in the dynamic harvest chart. A location of the averaged datapoint in the dynamic harvest chart may correspond to an averaged datapoint location of a plurality of datapoints. So, instead of continuing to show all datapoints (or a random single datapoint) obtained in a common time span and/or in a common field location, an averaged datapoint for that time span and/or field location may be displayed.

In some embodiments, the dynamic harvest chart may comprise information on fuel consumption, whether that is relative or absolute fuel consumption.

According to a further aspect of the invention a computer program product is provided comprising instructions executable by a computer which instructions, when executed by the computer, cause the computer to carry out a method as described above.

According to yet a further aspect of the invention, a system is provided for displaying harvesting information during harvesting by an agricultural harvester. The system comprises a yield sensor for measuring an amount of harvested crop, a crop content sensor for measuring an attribute of the harvested crop, and a controller, operatively coupled to the yield sensor and the crop content sensor and configured to perform a method as described above. The system may further comprise a display, operatively coupled to the controller to receive instructions for displaying the datapoint in the dynamic harvest chart. Preferably, the system is part of an agricultural harvester such as a forage harvester.

### BRIEF DESCRIPTION OF THE DRAWINGS

Embodiments of the invention will now be described by way of example with reference to the accompanying drawings.
Figure 1 shows a side view of a forage harvester wherein the invention may be implemented.
Figure 2 shows a schematic diagram with some essential elements for the method and system according to the invention.
Figures 3 to 6 show various dynamic harvest charts as may be displayed when using the forage harvester of Figure 1.

### DETAILED DESCRIPTION

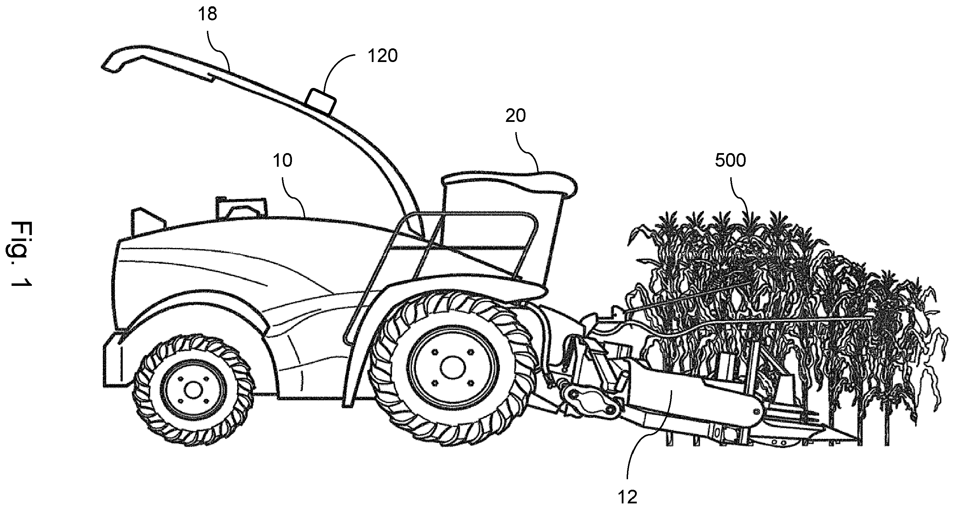

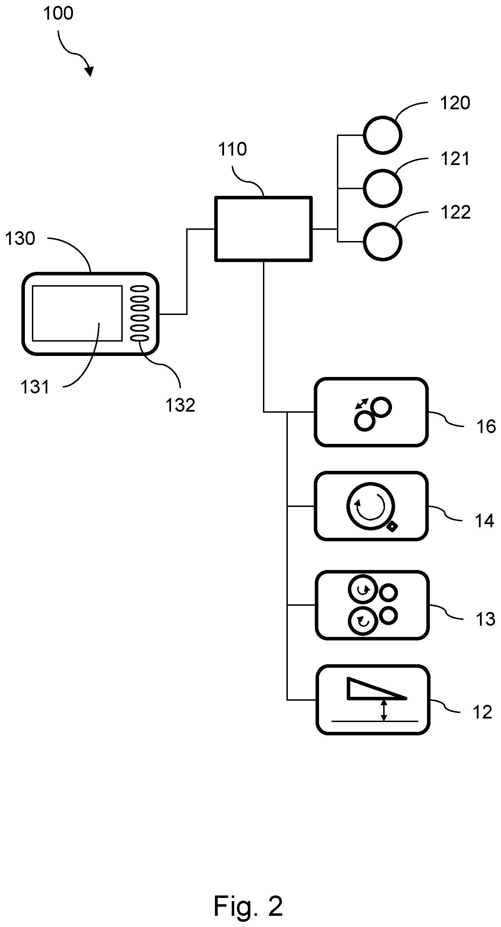

Figure 1 shows an agricultural harvester in the form of a forage harvester 10. Figure 2 shows a schematic diagram with some functional elements of this forage harvester 10. The forage harvester 10 is configured to harvest crops 500 such as corn and grass that can be used in the production of animal feed. To this end, a header 12 is attached to a front end of the forage harvester 10. The header 11 is adjustable in height and configured to cut and gather the crop 500 from a field as the forage harvester 10 moves forward. A set of feed rolls 13 is arranged to draw the cut crop from the header into a crop flow channel, where the crop is processed. The processed crop is then guided into a spout 18, accelerated by a blower (not shown), and discharged into a trailer that may drive alongside or behind the forage harvester 10.

The processing of the harvested crop typically involves chopping the crop 500 into smaller pieces using a cutter drum 14 and, optionally, a step of crushing the cut crop using a crop processor 16. The cutter drum 14 cuts the crop 500 between a rotating drum and a counter knife. The length of cut depends on the relative speed of the feed rolls 13 and the cutter drum 14. While the rotational speed of the cutter drum 14 is often directly linked to the engine speed, length of cut adjustments are typically realised by controlling the rotational speed of the feed rolls 13. The faster the feed rolls 13, the longer the crop pieces.

The crop processor 16, also called kernel processor 16, is positioned downstream the cutter drum 14 and made up of two toothed rolls with a very small gap therebetween. The main function of the kernel processor 16 is to crush corn and other cereal grains that easily pass the cutter drum 14 to release the nutritious content of the kernels. Similarly, the kernel processor 16 may be used to release more of the nutritious content of non-grain material. Often, the gap between the two toothed rolls can be adapted to control the operation of the kernel processor 16.

Adjusting operational parameters of the forage harvester 10, such as by changing the drive speed of the forage harvester 10, the height of the header 12, the rotational speed of the feed rolls 13, or the size of the gap between the toothed rolls of the kernel processor 16 may affect the volume and content of the harvested crop as it is gathered in the trailer. Additionally, such adjustments to the operational parameters influence the fuel consumption of the forage harvester 10. For example, lowering the header 12 will cause more crop 500 to be taken from the field and more fuel to be consumed for the processing of that crop 500. Also lowering the speed of the feed rolls 13 or reducing the gap between the kernel processor rolls 16 leads to a higher fuel consumption.

The operation of the forage harvester 10 and its various functional parts is controlled by one or more electronic controllers 110. A display unit 130 is operatively coupled to the controller 110 to show relevant operational information on a screen 131. The display unit 130 may further provide a graphical user interface, enabling the user to control what information is shown and to adjust one or more operational parameters when needed. The user interface may be controlled using hardware buttons 132 provided on the display unit or using on-screen buttons if the screen 131 is equipped with touch screen functionality.

Control of the harvester operation may at least partly be automatic, based on various sensors 120, 121, 122 that are provided for obtaining real-time information about the forage harvester 10 and/or the crop moving through it. For example, a video camera and/or NIR (Near InfraRed) sensor 120 may be provided at the spout 18 to monitor the crop moving through the spout. Based on this and other information, the controller 110 may generate instructions to show relevant information on screen 131 and/or to adjust one or more operational parameters of the forage harvester 10.

In an embodiment of the invention, harvesting data indicative of at least an amount of harvested crop 500 and a nutritional attribute of the harvested crop is gathered by the controller 110. The nutritional attribute may, e.g., include at least one of a moisture content, a protein content, and a fat content of the harvested crop. Such nutritional attributes may, e.g., be monitored using the NIR sensor 120 provided at the spout 18. Based on the received harvesting data, the controller then calculates a current yield parameter and a current quality parameter.

The current yield parameter represents an amount of crop that is being harvested and may, e.g., be expressed in tonnes per hour or tonnes per square meters (or per acre). The current quality parameter provides a measure for the quality of the cut crop. Important crop aspects determining the quality are, e.g., its moisture level, length of cut, ash content, fibre content, sugar content, and protein content. Other crop attributes, such as a colour profile, may be taken into account too. The controller 110 may use a predetermined model or formula for converting multiple quality-related crop parameters into a single current quality parameter. This model or formula may be crop-dependent and/or user-adjustable in order to allow the user to prioritise some crop attributes over other when desired.

Preferably, the current quality parameter is calculated using a model for predicting an amount of end product that can be produced with the harvested crop. The more end product can be obtained from a tonne of harvested crop, the higher the quality of the crop. For example, the end-product may be the amount of milk or meat that can be produced by a cow after having consumed the now harvested crop. If, for example, the crop is used for the production of biogas, the quality parameter may be expressed as a biogas volume obtainable per tonne of harvested crop. The current yield parameter may be calculated using such a model too. For example, the yield may be expressed as an amount of end product per hour or per square meters (or per acre). A known model that may be used for this purpose is the MILK2006 model developed by Randy Shaver et al of the University of Wisconsin. This model uses measured characteristics of the harvested crop, such as fibre content, ash content, and fat content to calculate how much milk an average cow will be able to produce per kg of consumed crop.

It is to be noted that the word 'current' in current yield parameter and current quality parameter refers to the most recently obtained harvesting data. However, this does not necessarily mean that only the last sensor readings are taken into account when calculating the current yield parameter and the current quality parameter. For example, the current yield and quality parameters may be determined on the basis of harvesting data obtained in the last 5, 10, 20, or 30 seconds. Alternatively, the current yield and quality parameters may be determined by averaging the harvesting data over the complete period since the most recent change to at least one of the operational parameters of the forage harvester 10.

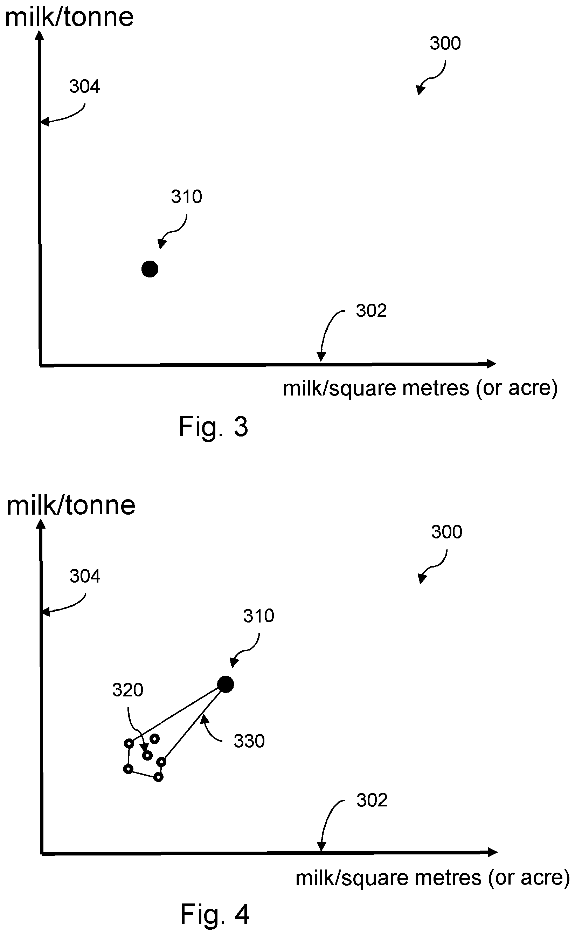

After having calculated the current yield and quality parameters, the controller 110 may then display these parameters to the user on the display screen 131 and/or use them for controlling the operation of the harvester 10. Figures 3 to 6 show various dynamic harvest charts 300 as may be used for displaying the current yield and quality parameters. The dynamic harvest charts 300 shown here have a horizontal yield axis 302 and a vertical quality axis 304. In this example, yield is measured in tonnes or litres of milk per square meters (or per acre) of harvested land. Quality may be measured in tonnes or litres of milk per tonne of harvested crop. In Figure 3, a dynamic harvest chart 300 is shown, just after harvesting has started or a dynamic chart module has been activated. This dynamic chart 300 therefore only shows a single datapoint 310. The datapoint 310 is positioned in the dynamic harvest chart 300 at a datapoint location along the yield axis 302 and the quality axis 304 and thereby indicates the current yield parameter and the current quality parameter. The current yield and quality parameters have just been calculated by the controller 110 based on the recently obtained harvesting data.

Figure 4 shows how this dynamic harvest chart 300 may subsequently evolve during the harvesting process. The initial datapoint and some subsequent past datapoints 320 are displayed as smaller circles, while the most recent datapoint 310, like in Figure 3, is indicated with a larger black dot. In addition thereto, the dynamic harvest chart 300 uses black lines 330 to indicate a datapoint space wherein all the datapoints 310, 320 collected during the current harvesting operation are shown. Like the past datapoints 320, the datapoint space will appear and form gradually during the harvesting process. In an embodiment of the invention, the dynamic data chart 300 may further show historic datapoints that relate to previous harvesting sessions in the same field and/or with the same harvester 10. Such historic datapoints may be indicated using a different colour, shape, or size. Some or all of the past datapoints 320 and/or historic datapoints may change appearance and/or completely disappear over time, while new datapoints 310, 320 are added the dynamic harvest chart 300.

As is clear from the dynamic harvest chart 300 in Figure 4, the current yield and the current quality parameter may increase simultaneously. This may, e.g., be caused by a change in header height. When raising the header 12 of the forage harvester 10, a larger portion of the harvested crop will have a high nutritional value. Even though the total amount of harvested crop will be smaller, the increased nutritional value may more than compensate for that. There is only a limited amount of food that a cow can eat and digest per day and part of the energy derived from its food is needed for the eating and digesting. Hence, as illustrated in Figure 4, a lower volume of high-quality crop may not only result in higher quality (milk/tonne), but in a higher yield (milk/square meters (or acre)) too.

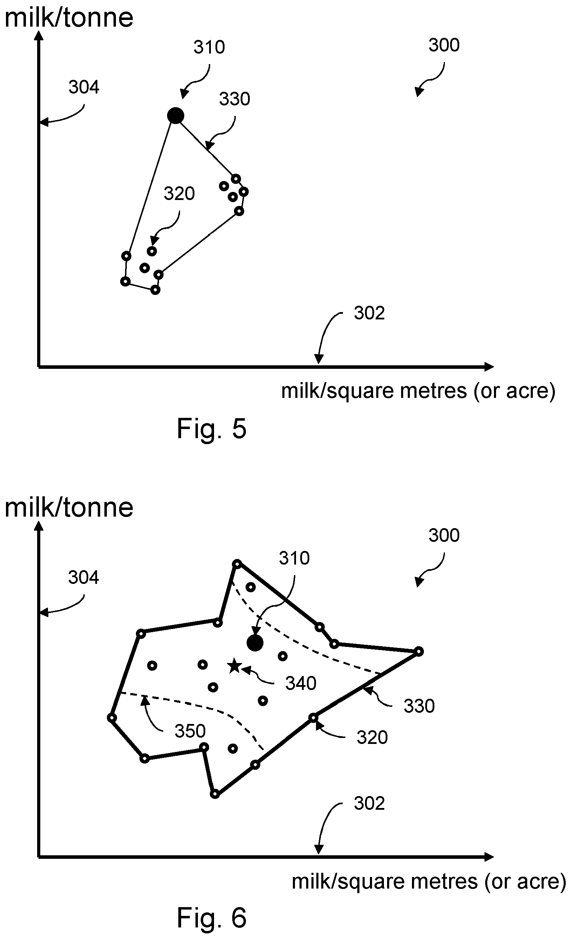

The dynamic harvest chart 300 of Figure 5 shows how, when the header 12 is raised even further, the current quality parameter may improve, while the current yield parameter decreases. If the user is primarily concerned with the quality of the harvested crop, he may be happy with the recent header height adjustments. If yield is more important, the information shown on the dynamic chart may make him decide to lower the header height again and return to a configuration for which one or more past datapoints 320 in the dynamic harvest chart 300 already indicate that it may allow for a higher yield. Optionally, the user interface may allow the user to select one of the past datapoints 320 for inspecting and/or activating the corresponding harvester configuration.

In Figure 6, a dynamic harvest chart 300 with some extra optional features is shown. For example, a star shaped average datapoint 340 indicates the average yield and quality parameter over the complete harvesting session. Alternatively, average datapoints may be shown indicating the average yield and quality parameters over different sections of the field. Like in Figures 4 and 5, the datapoint space is delimited by solid black lines 330. In addition thereto, dotted lines 350 are used to separate the datapoint space into, e.g., three different zones. The zone in the lower left part of the datapoint space comprises datapoints 320 corresponding to relatively low yield as well as quality. The zone in the upper right corner corresponds to the more desirable situation wherein both the yield and the quality are high. The different zones in this dynamic harvest chart 300 may be colour coded, e.g. using red, yellow, and green, for clearly indicating to the user when the harvester 10 is working in a close-to-optimal configuration and when some re-configuration may be desired to improve the harvesting results. It is an important advantage of the current invention that the dynamic harvest chart 300 is built up while harvesting. This enables the user to find the optimal harvester configuration for the particular field and crop that is being harvested.

In addition to yield and quality information, the dynamic harvest charts 300 may provide information about the fuel consumption of the harvester 10. When changing operational settings of the harvester 10, such as its forward drive speed, header height, feed roll speed, or kernel processor configuration, the fuel consumption may change too. Relative changes in fuel consumption may, e.g., be indicated in the dynamic harvest charts 300 by colour coding the datapoints 310, 320, or by adding a third dimension to the dynamic harvest charts 300. More detailed fuel consumption information may be made available for the most recent datapoint 310 and/or when the user selects a particular datapoint 310, 320 in the dynamic harvest chart 300. By providing information about the fuel consumption too, the user gets the opportunity to balance yield and quality with the amount of fuel needed to obtain that yield and quality. For example, if only a small gain in yield or quality is shown to come with a large increase in fuel consumption, the user may decide to revert to an earlier more fuel-efficient configuration.

In embodiments of the invention, the controller 110 may be configured to automatically find and apply the optimal harvester configuration, based on the yield and quality parameters it derives from the harvesting data. The user may be offered the option to have the harvester configuration optimised for either yield, quality, fuel efficiency, or a well-defined balance between two or three of these parameters. During harvesting, the controller 110 then monitors the current yield and quality parameters, as well as the current fuel consumption.

When the controller 110 makes small adjustments to one or more of the operational parameters of the harvester 10, a change in yield, quality and/or fuel efficiency may be observed. If this change is in accordance with the optimisation goals set by the user, the configuration adjustment is maintained. If not, the harvester 10 will revert to its previous configuration. Many different optimisation algorithms are available for the skilled person to configure the controller 110 such that it can control the harvester 10 in accordance with the user's optimisation preferences. Such optimisation algorithms may, e.g., make use of decision trees, fuzzy logic, machine learning, and neural networks.

## Claims

1. A method of displaying harvesting information during harvesting by an agricultural harvester, the method comprising the steps of repeatedly:
receiving harvesting data indicative of at least an amount of harvested crop and a nutritional attribute of the harvested crop,
based on the received harvesting data calculating a current yield parameter and a current quality parameter, and
generating instructions for displaying a datapoint in a dynamic harvest chart, the datapoint being positioned in the dynamic harvest chart at a datapoint location along a yield axis and a quality axis, the datapoint location being determined by the current yield parameter and the current quality parameter, **characterised in that** the step of calculating the current yield parameter and/or the current quality parameter comprises using a model for predicting an amount of end product that can be produced with the harvested crop and wherein the end product is milk, meat, or biogas.

2. A method of displaying harvesting information according to claim 1, wherein the current yield parameter represents an amount of end product per unit of harvested area.

3. A method of displaying harvesting information according to claim 1 or 2, wherein the current quality parameter represents an amount of end product per amount of harvested crop.

4. A method of displaying harvesting information according to claim 1, wherein the nutritional attribute of the harvested crop includes at least one of a moisture content, a protein content, and a fat content.

5. A method of displaying harvesting information according to claim 1, wherein an appearance of the datapoint is time dependent.

6. A method of displaying harvesting information according to claim 1, further comprising generating instructions for displaying a datapoint space in the dynamic harvest chart, the datapoint space forming a bound area comprising all datapoints displayed in the dynamic harvest chart.

7. A method of displaying harvesting information according to claim 1, further comprising generating instructions for displaying an averaged datapoint in the dynamic harvest chart, a location of the averaged datapoint in the dynamic harvest chart corresponding to an averaged datapoint location of a plurality of datapoints.

8. A method of displaying harvesting information according to claim 7, wherein the plurality of datapoints is obtained in a common time span and/or in a common field location.

9. A method of displaying harvesting information according to claim 1, wherein the dynamic harvest chart comprises information about the absolute or relative fuel consumption.

10. A system for displaying harvesting information during harvesting by an agricultural harvester, the system comprising:
a yield sensor for measuring an amount of harvested crop,
a crop content sensor for measuring an attribute of the harvested crop, and
a controller, operatively coupled to the yield sensor and the crop content sensor and configured to perform a method as claimed in any of claims 1 to 9.

11. A system for displaying harvesting information as claimed in claim 10, further comprising a display, operatively coupled to the controller to receive instructions for displaying the datapoint in the dynamic harvest chart.

12. A forage harvester comprising a system as claimed in claim 10.

13. A computer program product comprising instructions executable by a computer which instructions, when executed by the computer, cause the sytem of claims 10 or 11 to carry out a method as claimed in any of claims 1 to 9.

## Patentansprüche

1. Ein Verfahren zum Anzeigen von Ernteinformationen während der Ernte durch eine landwirtschaftliche Erntemaschine, wobei das Verfahren umfasst die Schritte des wiederholten:
Empfangens von Erntedaten, die zumindest eine Menge an geerntetem Erntegut und ein Nährstoffmerkmal des geernteten Ernteguts anzeigen,
Berechnens eines aktuellen Ertragsparameters und eines aktuellen Qualitätsparameters, basierend auf den empfangenen Erntedaten, und
Erzeugens von Anweisungen zum Anzeigen eines Datenpunkts in einem dynamischen Erntediagramm, wobei der Datenpunkt in dem dynamischen Erntediagramm an einer Datenpunktposition entlang einer Ertragsachse und einer Qualitätsachse positioniert wird, wobei die Datenpunktposition durch den aktuellen Ertragsparameter und den aktuellen Qualitätsparameter bestimmt wird, **dadurch gekennzeichnet, dass** der Schritt des Berechnens des aktuellen Ertragsparameters und/oder des aktuellen Qualitätsparameters das Verwenden eines Modells zum Vorhersagen einer Menge an Endprodukt umfasst, die mit der geernteten Ernte produziert werden kann, und worin das Endprodukt Milch, Fleisch oder Biogas ist.

2. Ein Verfahren zur Anzeige von Ernteinformationen nach Anspruch 1, worin der aktuelle Ertragsparameter eine Menge an Endprodukt pro Einheit geernteter Fläche darstellt.

3. Ein Verfahren zur Anzeige von Ernteinformationen nach Anspruch 1 oder 2, worin der aktuelle Qualitätsparameter eine Menge an Endprodukt pro Menge an geerntetem Erntegut darstellt.

4. Ein Verfahren zur Anzeige von Ernteinformationen nach Anspruch 1, worin das Nährstoffmerkmal der geernteten Ernte mindestens eines von einem Feuchtigkeitsgehalt, einem Proteingehalt und einem Fettgehalt umfasst.

5. Ein Verfahren zur Anzeige von Ernteinformationen nach Anspruch 1, worin ein Erscheinungsbild des Datenpunkts zeitabhängig ist.

6. Ein Verfahren zur Anzeige von Ernteinformationen nach Anspruch 1, ferner umfassend das Erzeugen von Anweisungen zur Anzeige eines Datenpunktraums in dem dynamischen Erntediagramm, wobei der Datenpunktraum einen begrenzten Bereich bildet, der alle in dem dynamischen Erntediagramm angezeigten Datenpunkte umfasst.

7. Ein Verfahren zur Anzeige von Ernteinformationen nach Anspruch 1, ferner umfassend das Erzeugen von Anweisungen zur Anzeige eines gemittelten Datenpunkts in dem dynamischen Erntediagramm, wobei eine Position des gemittelten Datenpunkts in dem dynamischen Erntediagramm einer gemittelten Datenpunktposition einer Vielzahl von Datenpunkten entspricht.

8. Ein Verfahren zur Anzeige von Ernteinformationen nach Anspruch 7, worin die Vielzahl von Datenpunkten in einer gemeinsamen Zeitspanne und/oder an einem gemeinsamen Feldstandort erhalten wird.

9. Ein Verfahren zur Anzeige von Ernteinformationen nach Anspruch 1, worin das dynamische Erntediagramm Informationen über den absoluten oder relativen Kraftstoffverbrauch umfasst.

10. Ein System zur Anzeige von Ernteinformationen während der Ernte durch eine landwirtschaftliche Erntemaschine, wobei das System umfasst:
ein Ertragssensor zum Messen einer Menge von geerntetem Erntegut, einen Erntegut-Sensor zum Messen eines Attributs des geernteten Ernteguts, und
eine Steuerung, die mit dem Ertragssensor und dem Erntegutinhaltssensor wirkverbunden und dazu konfiguriert ist, ein Verfahren nach einem der Ansprüche 1 bis 9 durchzuführen.

11. Ein System zur Anzeige von Ernteinformationen nach Anspruch 10, ferner umfassend eine Anzeige, die mit der Steuerung wirkverbunden ist, um Anweisungen zur Anzeige des Datenpunkts in dem dynamischen Erntediagramm zu empfangen.

12. Ein Feldhäcksler, der ein System nach Anspruch 10 umfasst.

13. Ein Cümpufer-Prügramm-Prüdukf, das vün einem Cümpufer ausfuhrbare Anweisungen umfassf, wübei diese Anweisungen, wenn sie vün dem Cümpufer ausgefuhrf werden, das Sysfem nach Anspruch 10 üder 11 veranlassen, ein Verfahren nach einem der Anspruche 1 bis 9 auszufuhren.

## Revendications

1. Procédé d'affichage d'informations de récolte pendant la récolte par une récolteuse agricole, le procédé comprenant les étapes consistant à, de manière répétée :
recevoir des données de récolte indiquant au moins une quantité de culture récoltée et un attribut nutritionnel de la culture récoltée,
sur la base des données de récolte reçues, calculer un paramètre de rendement actuel et un paramètre de qualité actuel, et
générer des instructions pour afficher un point de données dans un graphique de récolte dynamique, le point de données étant positionné dans le graphique de récolte dynamique à un emplacement de point de données le long d'un axe de rendement et d'un axe de qualité, l'emplacement de point de données étant déterminé par le paramètre de rendement actuel et le paramètre de qualité actuel, **caractérisé en ce que** l'étape de calcul du paramètre de rendement actuel et/ou du paramètre de qualité actuel comprend l'utilisation d'un modèle pour prédire une quantité de produit final pouvant être produite avec la culture récoltée et dans lequel le produit final est du lait, de la viande ou du biogaz.

2. Procédé d'affichage d'informations de récolte selon la revendication 1, dans lequel le paramètre de rendement actuel représente une quantité de produit final par unité de surface récoltée.

3. Procédé d'affichage d'informations de récolte selon la revendication 1 ou 2, dans lequel le paramètre de qualité actuel représente une quantité de produit final par quantité de culture récoltée.

4. Procédé d'affichage d'informations de récolte selon la revendication 1, dans lequel l'attribut nutritionnel de la culture récoltée comporte au moins l'une parmi une teneur en humidité, une teneur en protéines et une teneur en matières grasses.

5. Procédé d'affichage d'informations de récolte selon la revendication 1, dans lequel une apparence du point de données dépend du temps.

6. Procédé d'affichage d'informations de récolte selon la revendication 1, comprenant en outre la génération d'instructions pour afficher un espace de point de données dans le graphique de récolte dynamique, l'espace de point de données formant une zone délimitée comprenant tous les points de données affichés dans le graphique de récolte dynamique.

7. Procédé d'affichage d'informations de récolte selon la revendication 1, comprenant en outre la génération d'instructions pour afficher un point de données moyenné dans le graphique de récolte dynamique, un emplacement du point de données moyenné dans le graphique de récolte dynamique correspondant à un emplacement de point de données moyenné d'une pluralité de points de données.

8. Procédé d'affichage d'informations de récolte selon la revendication 7, dans lequel la pluralité de points de données est obtenue dans un intervalle de temps commun et/ou dans un emplacement de champ commun.

9. Procédé d'affichage d'informations de récolte selon la revendication 1, dans lequel le graphique de récolte dynamique comprend des informations sur la consommation de carburant absolue ou relative.

10. Système pour afficher des informations de récolte pendant la récolte par une récolteuse agricole, le système comprenant :
un capteur de rendement pour mesurer une quantité de culture récoltée, un capteur de contenu de culture pour mesurer un attribut de la culture récoltée, et
un dispositif de commande, couplé de manière opérationnelle au capteur de rendement et au capteur de contenu de culture et configuré pour effectuer un procédé selon l'une quelconque des revendications 1 à 9.

11. Système pour afficher des informations de récolte selon la revendication 10, comprenant en outre un dispositif d'affichage couplé de manière opérationnelle au dispositif de commande pour recevoir des instructions pour afficher le point de données dans le graphique de récolte dynamique.

12. Ensileuse comprenant un système selon la revendication 10.

13. Produit-programme d'ordinateur comprenant des instructions executables par un ordinateur, lesquelles instructions, lorsqu'elles sont executees par l'ordinateur, amenent le systeme selon les revendications 10 ou 11 a realiser un precede selon l'une quelconque des revendications 1 a 9.
